# EUROPEAN PATENT SPECIFICATION

(11) **EP 1 184 545 B1**
(45) Date of publication and mention of the grant of the patent: **08.11.2006**
(21) Application number: 01125813.4
(22) Date of filing: 15.07.1997
(51) Int. Cl.: F01N 3/20

(54) **Method and apparatus for injecting hydrogen into a catalytic converter**
Verfahren und Vorrichtung zum Einspritzen von Wasserstoff in einen katalytischen Umwandler
Procédé et dispositif pour injecter de l'hydrogène dans un convertisseur catalytique

(30) Priority: 16.07.1996 US 682024
(43) Date of publication of application: 06.03.2002
(62) Divisional of application: 97936960.0
(73) Proprietor: Lynntech, Inc., College Station, TX 77840 (US)
(72) Inventor: Murphy, Oliver J., Bryan, TX 77802 (US); Andrews, Craig C., College Station, TX 77840 (US)
(74) Representative: Lockey, Robert Alexander

(56) References cited:
- WO-A-96/11330
- DE-A- 4 208 609
- US-A- 3 321 334
- US-A- 5 332 630
- PATENT ABSTRACTS OF JAPAN vol. 1995, no. 08, 29 September 1995 (1995-09-29) & JP 07 122280 A (KANSAI ELECTRIC POWER CO INC:THE;OTHERS: 01), 12 May 1995 (1995-05-12)
- PATENT ABSTRACTS OF JAPAN vol. 1996, no. 04, 30 April 1996 (1996-04-30) & JP 07 326376 A (MITSUBISHI HEAVY IND LTD), 12 December 1995 (1995-12-12)

## Description

### "An Electrolyser Arrangement"

The present invention relates to an electrolyser arrangement, in particular an electrolyser arrangement for a vehicle.

US 5332630 discloses an-onboard recharging system for battery powered electric vehicles which includes, interalia, a fuel cell stack and a cooling system. The cooling system may either take the form of a cooling jacket which defines a fuel cell chamber surrounding the fuel cell stack or, alternatively, a cooling assembly comprising a series of cooling elements arranged in between fuel cell stacks, and mechanically isolated from the fuel cell stack. In the case where a cooling jacket is used, the arrangement also comprises a thermal control cylinder moveable between a deployed position wherein axially aligned with the fuel stack, and a stowed position, wherein it is axially off-set from the fuel cell stack. The thermal control cylinder thus provides a means of variable thermal resistance between the fuel cell stack and the cooling jacket. In the case where a cooling assembly is used, the assembly comprises a plurality of cooling elements, through which a coolant is circulated. In either embodiment, heat extraction is achieved primarily by means of thermal radiation.

JP 07 122280 discloses a stack incorporating a unit fuel cell. Three flow paths for coolant run through the stack, with each flow path being connected to a separate, dedicated radiator.

US 3,321,334 discloses a fuel cell unit incorporating a dummy module into which may be injected a liquid fuel. In operation of the device, fuel flowing through the dummy module 8 is vaporised, thus creating a cooling effect on surrounding fuel cell modules.

DE 42 08 609 discloses a vehicle engine incorporating a radiator forming part of a closed fluid flow path. A portion of the closed fluid flow path acts as a heat exchanger with a supplementary reservoir containing liquid electrolyte which is to be pumped into a single cell electrolyser unit within the engine.

It is an object of the present invention to seek to provide an improved electrolyser arrangement.

FIGURE 1 is a schematic diagram of an electrolyser having dummy cells for heating or cooling the electrolyser using liquid from a vehicle radiator;

FIGURE 2A, B, C and D are schematic diagrams of three electrical systems for providing electrical power to the electrolyser.

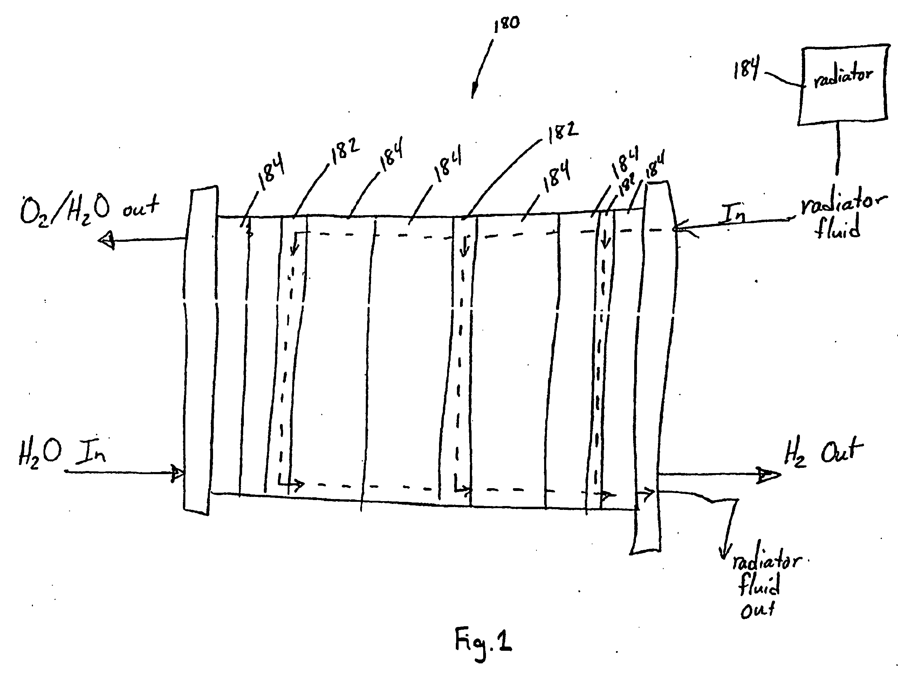

Now referring to Figure 1, a schematic diagram of an electrolyser 180 is shown having dummy cells 182 for heating or cooling the electrolyser using liquid from a vehicle radiator 184. The dummy cells 182 may be comprised of plates using a passage for the radiator fluid between electrolytic cells 184 in order to absorb or deliver heat to the electrolyser. Because electrolysers operate most efficiently at elevated temperatures, the radiator may be used to warm the electrolyser in cold weather conditions. Alternately, the radiator fluid may be used to cool the electrolyser after an extended period of use.

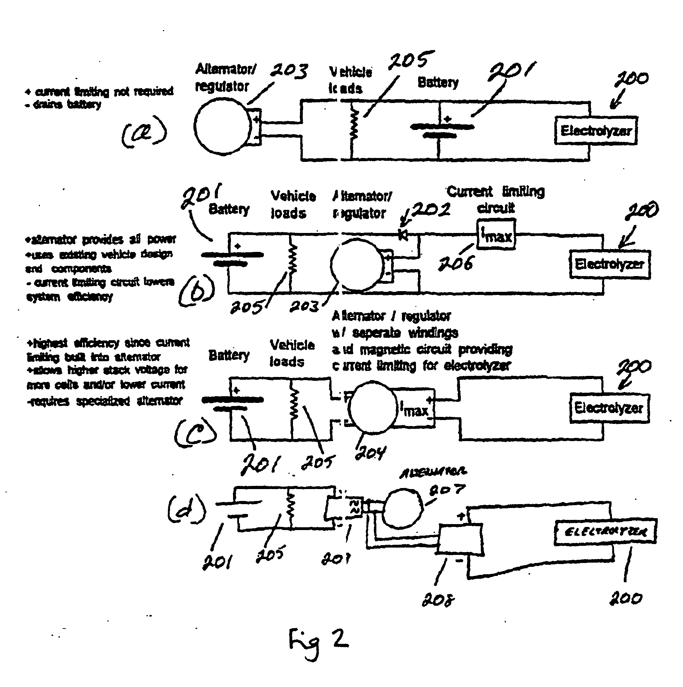

Now referring to Figures 2A to C, there are four possible topologies for the powering of the electrolyser system 200. In Figure 2A the primary source of electrolyser power is drawn directly from the vehicle battery 201 as well as from the alternator 203. Figure 2B eliminates the electrical draw on the battery 201 by placing diode 202 between the alternator 203 and the battery 201. Diode 202 allows current flow from the alternator to the battery and other vehicle loads 205 but stops current flow from the battery to the electrolyser 200. The current limiting circuit 206 protects the electrical system from over currents that could be drawn by the electrolyser as the electrolyser resistance changes. Figure 2C is shown having an alternator 204 having an additional winding in which the magnetic circuit provides current limiting to the electrolyser 200. This second winding would also allow higher voltages to be delivered to the electrolyser 200, allowing the number of cells within the stack to be increased. Figure 2D is a system in which the vehicle alternating current is drawn from the alternator 207 before the vehicle regulator 209 and a separate current control/regulator 208 provides electrical power to the electrolyser 200. This topology is able to current limit the electrolyser load and provide higher voltages to the electrolyser while using a conventional alternator.

## Claims

1. An electrolyser arrangement for a vehicle, the arrangement including an electrolyser to convert water into hydrogen and oxygen gas, the electrolyser comprising a plurality of electrolytic cells comprised of plates and a plurality of dummy cells comprised of plates, the dummy cells providing a passage for radiator fluid from a vehicle radiator, the arrangement being such that vehicle radiator fluid may be used to warm the electrolyser in cold conditions, and the radiator fluid may be used to cool the electrolyser after an extended period of use.

## Patentansprüche

1. Elektrolyseapparatur für ein Fahrzeug, wobei die Apparatur ein Elektrolysegerät einschließt, um Wasser in Wasserstoff- und Sauerstoffgas umzuwandeln, wobei das Elektrolysegerät eine Vielzahl an von Platten umfaßten elektrolytischen Zellen und eine Vielzahl an von Platten umfaßten Schein-Zellen umfaßt, die Schein-Zellen einen Durchgang für Radiatorfluid von einem Fahrzeugradiator bereitstellen, die Apparatur so ist, daß Fahrzeugradiatorfluid verwendet werden kann, um das Elektrolysegerät in Kaltzuständen zu erwärmen, und das Radiatorfluid verwendet werden kann, um das Elektrolysegerät nach einer ausgedehnten Verwendungsdauer zu kühlen.

## Revendications

1. Agencement d'électrolyseur pour un véhicule, l'agencement comprenant un électrolyseur pour convertir de l'eau en gaz hydrogène et oxygène, l'électrolyseur comprenant une pluralité de cellules électrolytiques constituées de plaques et une pluralité de cellules inactives constituées de plaques, les cellules inactives fournissant un passage pour le fluide du radiateur provenant d' un radiateur du véhicule, l'agencement étant tel que le fluide du radiateur du véhicule peut être utilisé pour réchauffer l'électrolyseur dans des conditions froides, et le fluide du radiateur peut être utilisé pour refroidir l'électrolyseur après une période prolongée d'utilisation.
